# EUROPEAN PATENT SPECIFICATION

(11) **EP 2 697 958 B1**
(45) Date of publication and mention of the grant of the patent: **02.09.2015**
(21) Application number: 12713146.4
(22) Date of filing: 05.04.2012
(51) Int. Cl.: H04L 29/12

(54) **System and method for translating network addresses**
System und Verfahren zur Übersetzung von Netzwerkadressen
Système et procédé pour traduire des adresses réseau

(30) Priority: 11.04.2011 US 201113084525
(43) Date of publication of application: 19.02.2014
(73) Proprietor: Skype, Dublin 2 (IE)
(72) Inventor: KAUFMAN, Matthew, California 95060 (US)
(74) Representative: Driver, Virginia Rozanne
(86) International application number: PCT/EP2012/056304
(87) International publication number: WO 2012/139971

(56) References cited:
- BAGNULO UC3M A SULLIVAN SHINKURO P MATTHEWS ALCATEL-LUCENT I VAN BEIJNUM IMDEA NETWORKS M: "DNS64: DNS extensions for Network Address Translation from IPv6 Clients to IPv4 Servers; draft-ietf-behave-dns64-11.txt", DNS64: DNS EXTENSIONS FOR NETWORK ADDRESS TRANSLATION FROM IPV6 CLIENTS TO IPV4 SERVERS; DRAFT-IETF-BEHAVE-DNS64-11.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZER, no. 11, 1 October 2010 (2010-10-01), pages 1-32, XP015071425,
- ARKKO A KERANEN ERICSSON J: "Experiences from an IPv6-Only Network; draft-arkko-ipv6-only-experience-02.txt", EXPERIENCES FROM AN IPV6-ONLY NETWORK; DRAFT-ARKKO-IPV6-ONLY-EXPERIENCE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 26 October 2010 (2010-10-26), pages 1-19, XP015072342,

## Description

### BACKGROUND

### Field of the Invention

This invention relates generally to the field of data processing systems. More particularly, the invention relates to an improved computer-implemented method, computer-implemented system and machine-readable medium for translating network addresses.

### Description of the Related Art

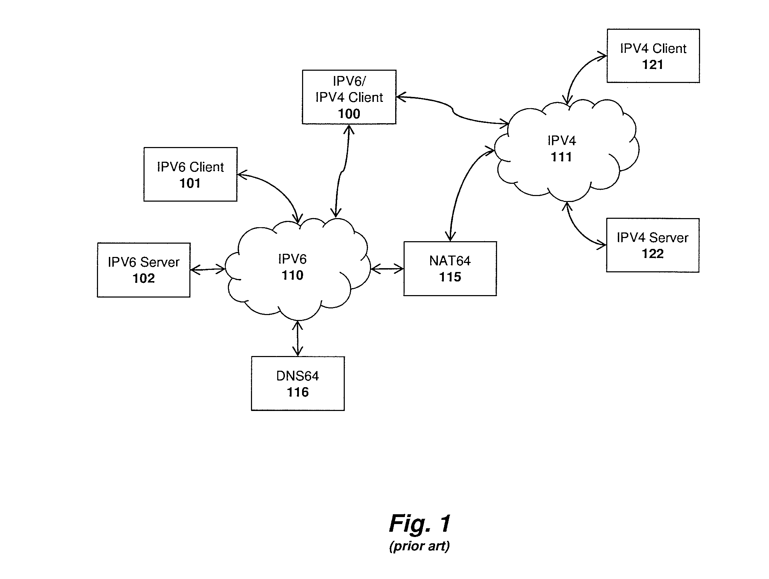

There are currently two forms of the TCP/IP networking protocol, referred to as Internet Protocol Version 4 (IPv4) and Internet Protocol Version 6 (IPv6). IPv6 is designed to succeed Internet Protocol version 4 (IPv4), which is currently in widespread use across the Internet. IPv6 is also largely incompatible with IPv4, utilizing a different addressing space and connection protocol. Consequently, as illustrated in **Figure 1****,** a client 101 or server 102 configured with an IPv6 interface but not an IPv4 interface may communicate directly over IPV6 networks 110 but not IPv4 networks 111. Similarly, a client 121 or server 122 configured with an IPv4 interface but not an IPv6 interface may communicate directly over IPv4 networks 111 but not IPv6 networks 110. As illustrated, certain clients 100 and servers (not shown) equipped with both IPv4 and IPv6 interfaces may communicate over both the IPv4 and the IPv6 networks.

Various IPv6 transition mechanisms have been specified to facilitate the transitioning of the Internet from its IPv4 infrastructure to the next generation addressing system of IPv6. Two such transition mechanisms are NAT64 (Network Address Translation 64) and DNS64 (Domain Name Service 64). NAT64 performs network address translation functions to allow an IPv6-only host to communicate with IPv4-only hosts. As illustrated in **Figure 1****,** a NAT64 server 115 acts as the endpoint for at least one IPv4 address and a IPv6 network segment of 32-bits. The IPv6 host embeds the IPv4 address it wishes to communicate with using these bits, and sends its packets to the resulting address. The NAT64 server then creates a NAT-mapping between the IPv6 address and the IPv4 address. A DNS64 server 116 converts an "A" record returned by most DNS servers that typically associate an IPv4 address with a hostname to an "AAAA" record comprising a synthetic IPv4-mapped IPv6 address. This synthetic address points to the IPv6 interface of the NAT64 translator, and a portion of this address encodes the actual IPv4 address (for use by the NAT64 translator to connect with the IPv4 destination). DNS64 is described in the Internet-Draft "DNS64: DNS extensions for Network Address Translation from IPv6 Clients to IPv4 Servers; draft-ietf-behave-dns64-11.txt", Bagnulo M et al, October 1, 2010.

For example, in **Figure 1****,** IPV6 client 101 may communicate with IPV4 Server 122 by making a DNS query to the DNS64 service 116 using the network name associated with the IPv4 server 122 (e.g., www.skype.com). In response, the DNS64 service returns an IPv4-mapped IPv6 address to IPV6 client 122 identifying the NAT64 server 115. The IPv6 client 101 then connects with the IPv4 server 122 via the NAT64 server 115.

However, the above mechanisms fail if the IPv6-only client has an "IPv4 address literal" - i.e., an IPv4 address that it received via a mechanism other than a DNS lookup. By way of example, certain peer-to-peer (P2P) clients such as Bittorrent™ clients and Skype™ clients may receive IPv4 address literals from other clients in response to queries. In these cases, the clients are unable to use the IPv4 address literals if they have no IPv4 interfaces.

Several approaches have been proposed to address these problems but all are deficient on one way or another and may require changes to the NAT64/DNS64 (at a minimum) and/or changes to client operating system network stacks. For example, several proposals are described in *Analysis of Solution Proposals for Hosts to Learn NA T64 Prefix, Behavior Engineering for Hindrance Avoidance (BEHAVE)* (Oct. 17, 2010). One proposal described in Section 4.3 of this document is of particular relevance to the present patent application. This section describes how an IPv6 host with an IPv4 literal may send a DNS query for an AAAA record of a Well-Known IPv4-only Fully Qualified Domain Name (FQDN). If the host receives a negative reply, then there are no DNS64 or NAT64 services on the network. If the host receives a reply, then the network must be utilizing IPv6 address synthesis. After receiving a synthesized AAAA Resource Record, the host examines the received IPv6 address and attempts to decipher the network specific prefix (NSP) used by the NAT64 and DNS64 (e.g., by "subtracting" the known IPv4 address out of synthesized IPv6 address). Once the NSP is known, the host may synthesize its own IPv6 addresses using its IPv4 addresses.

Because various different encoding techniques may be used to embed the IPv4 address within the IPv6 address, however, it may not always be possible to "subtract" out the IPv4 address to determine the NSP. Consequently, additional techniques are needed to translate IPv4 literals to IPv6 addresses for certain clients and/or server.

### SUMMARY

The invention provides a computer-implemented method, a computer-implemented system and a machine-readable medium according to the appended independent claims. In particular, the computer-implemented method for generating an Internet Protocol Version 6, IPv6, address from an Internet Protocol Version 4, IPv4, address literal comprises: constructing a host name for a domain name query at a first host by combining the IPv4 address literal with a domain name of a first domain name server, the first domain name server configured to interpret the host name containing the IPv4 address literal to generate an A record including the IPv4 address; wherein the A record is usable to generate a synthetic IPv6 address, the synthetic IPv6 address including a first portion identifying a network address translation, NAT, 64 server and a second portion identifying an IPv4 host associated with the IPv4 address literal; and receiving the synthetic IPv6 address at the first host, the synthetic IPv6 address usable by the first host to connect to the IPv4 host through the NAT64 server.

### BRIEF DESCRIPTION OF THE DRAWINGS

A better understanding of the present invention can be obtained from the following detailed description in conjunction with the following drawings, in which:
**FIG. 1** illustrates a prior art network architecture including a NAT64 service and a DNS64 service.
**FIG. 2** illustrates a system architecture according to one embodiment of the invention.
**FIG. 3** illustrates a software architecture for determining a synthetic IPv6 address coding scheme and using the coding scheme to generate synthetic IPv6 addresses.
**FIG. 4** illustrates a method for detecting if a host is in a NDS64/NAT64 environment.
**FIG. 5** illustrates one embodiment of a method for generating a synthetic IPv6 address using an IPv4 literal address.
**FIG. 6** illustrates a method for analyzing multiple DNS responses to determine a NAT64 address.
**FIG. 7** illustrates a system architecture of an exemplary host according to one embodiment of the present invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

One embodiment of the invention addresses the limitations discussed above by using specially-crafted DNS queries in conjunction with a specialized DNS translation server operated by an application provider (or other third party) to allow a NAT64/DNS64 to provide synthesized mappings for any IPv4 literal addresses that may be on hand as a result of other application functions. For example, in a peer-to-peer (P2P) implementation, these literal addresses may be returned in response to a query from other clients or servers on the P2P network. It should be noted, however, that the underlying principles of the invention are not limited to a P2P implementation.

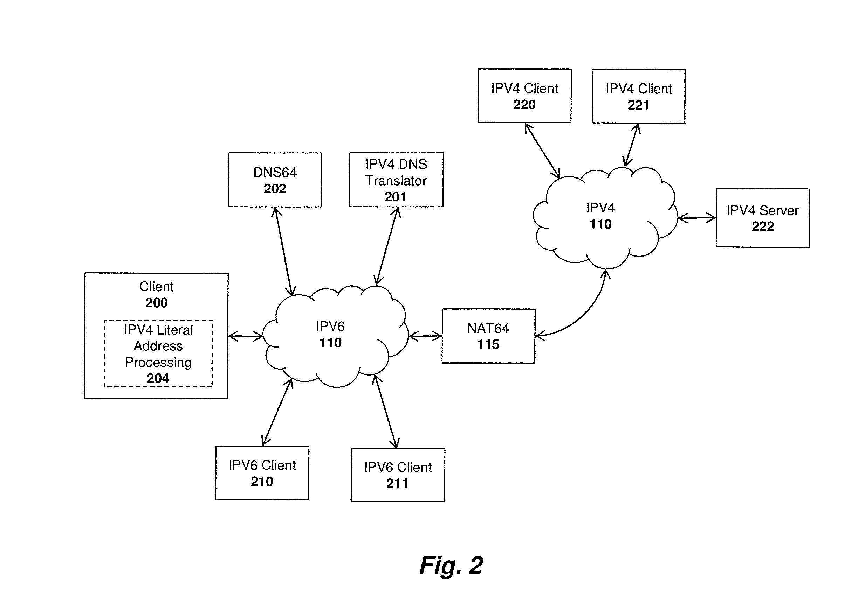

In one embodiment illustrated in **Figure 2****,** when an IPv4 address literal is on hand, an IPv4 literal address processing module 204 executed on a client 200 constructs a DNS query requesting the AAAA (IPv6 address) record associated with <IPv4 address>.<server-name>.<application-provider> where <IPv4 address> is the IPv4 literal and <server-name>.<application-provider> identifies a DNS translation server 201. By way of example, if the IPv4 address literal is 172.16.254.1 and the DNS translation server 201 is nat64-discovery.example.com, then the DNS query will be to the 172.16.254.1.nat64-discovery.example.com. In this embodiment, the DNS translation server 201 responsible for "nat64-discovery.example.com" is a specialized server that for any query "w.x.y.z.nat64-discovery.example.com" returns the A (IPv4 address) record "w.x.y.z." Consequently, in the above example it would return "172.16.254.1."

In operation, the query 172.16.254.1.nat64-discovery.example.com is initially received by the DNS64 server 202 which queries the specialized DNS translation server 201. The DNS translation server 201 responds with the A record 172.16.254.1 which the DNS64 server uses to construct a synthetic IPv6 address (an AAAA record) which it then returns to the IPv4 literal address processing logic 204 on the client 200. The client 200 may then open a connection to the remote client 220-221 or server 222 identified by the IPv4 address 172.16.254.1 through the NAT64 device 115 (i.e., identified by the synthesized IPv6 address).

The IPv4 literal address processing module 204 may be implemented in a variety of ways while still complying with the underlying principles of the invention. For example, in one embodiment, the IPv4 literal address processing module 204 comprises a component of a larger peer-to-peer (P2P) application program (e.g., such as a Bittorrent client or Skype client) or other type of application. Alternatively, or in addition, the IPv4 literal address processing module 204 may be provided as a component of an operating system executed on the client 200 (e.g., as part of the networking stack provided with the operating system). It should be noted, however, that the underlying principles of the invention are not limited to any particular implementation of the IPv4 literal address processing module 204.

Note that the query generated by the IPv4 literal address processing module 204 may result in a failure if there is no NAT64/DNS64 present. Consequently, if a failure is detected (or if a specified number of failures are detected), then no further attempts may be made. A flag may be set noting that NAT64/DNS64 is not present and that IPv4 literal addresses cannot currently be used (assuming there is no IPv4 interface available).

As discussed in the background section of the present application, it is not sufficient to attempt to extract a synthesized IPv6 prefix resulting from a single query because the exact mapping scheme cannot be determined based on a single response. For example, the mapping scheme may not be linear (in which case a simple bitwise substitution will not work) and/or multiple NAT64 devices may be in use with the DNS64 doing load balancing and/or other techniques may be in use to optimize which NAT64 is selected for a given IPv4 destination.

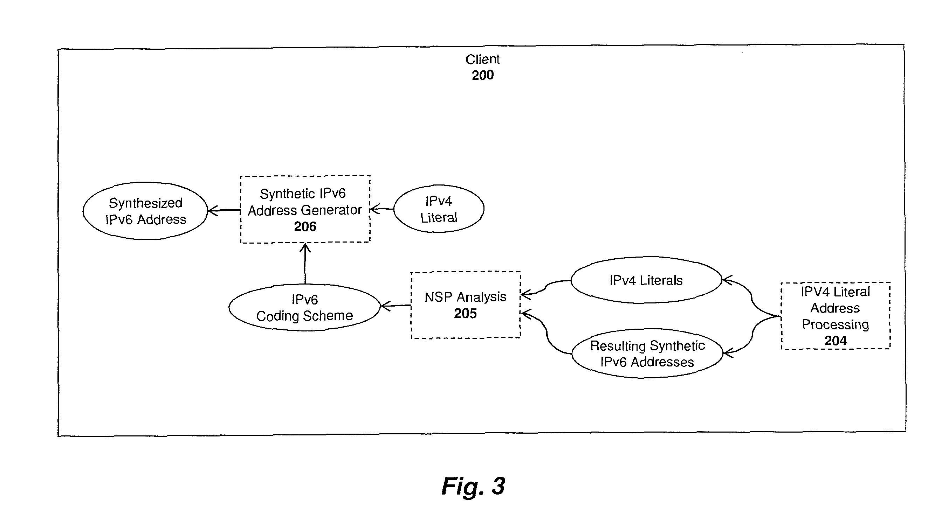

However, it may be possible to decipher the mapping scheme by heuristically analyzing multiple responses to IPv4 literal address queries. Consequently, in one embodiment of the invention illustrated in **Figure 3****,** the IPv4 literal address processing module 204 performs queries as described above for all (or a subset of) the lPv4 literal addresses on hand and receives the corresponding synthetically-generated IPv6 addresses. Then, in one embodiment, a network specific prefix (NSP) analysis module 205 analyzes the results of the queries to attempt to determine the IPv6 coding scheme being used by the DNS64/NAT64 system. For example, if the IPv4 address is simply embedded within a particular 32-bit field of the IPv6 address (e.g., the upper/lower 32 bits), then the NSP analysis module 205 may identify the coding scheme by performing a correlation between the IPv4 literals and the resulting synthetic IPv6 addresses. Once the coding scheme is determined, a synthetic IPv6 address generator 206 executed on the client 200 may synthetically generate IPv6 addresses using any IPv4 literals (at least as long as the client is within the same DNS64/NAT64 environment). More advanced processing techniques may be employed to "subtract" out the known IPv4 address from the IPv6 address to arrive at the synthetic IPv6 coding scheme (e.g., such as described in Analysis of Solution Proposals for Hosts to Learn NAT64 Prefix, Behavior Engineering for Hindrance Avoidance (BEHAVE) (Oct. 17, 2010)).

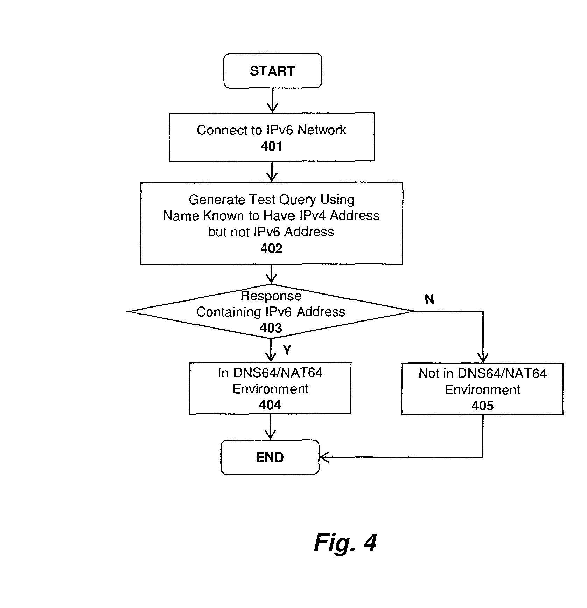

A method for determining whether a host is within a NDS64/NAT64 environment is illustrated in **Figure 4****.** At 401, the host connects to the IPv6 network and at 402, the host generates a test query using a network name known to have an IPv4 address but not an IPv6 address. For example, in one embodiment, the test query may take the form of <IPv4 address>.<server-name>.<application-provider> as described above. Of course, various other known IPv4 host names may be used while still complying with the underlying principles of the invention. If a response to the test query is received, determined at 403, then at 404, a determination is made that the host is in a DNS64/NAT64 environment. The host may then attempt to determine the NSP mapping scheme as described above. If no response is received, then a determination is made at 405 that the host is not in a DNS64/NAT64 environment.

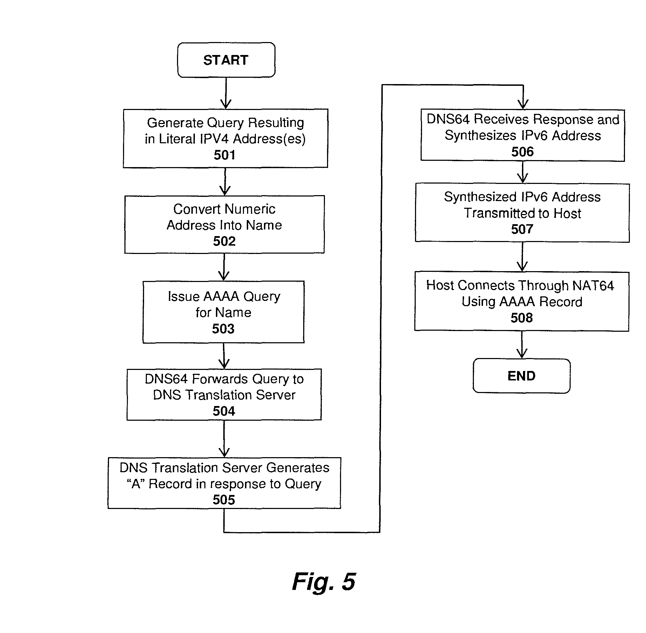

**Figure 5** illustrates one embodiment of a method for connecting to an IPv4-only host over an IPv6 network using an IPv4 literal address. Certain aspects of this method were described above with respect to the system architecture shown in **Figure 2****.** However, the underlying principles of this embodiment of the invention are not limited to any particular system architecture.

At 501, a query is generated resulting in one or more IPv4 literal addresses. By way of example, a P2P client (e.g., a Bittorrent or Skype client) may receive one or more IPv4 literals in response to a query. At 502, the IPv4 literal addresses are converted into a network name using a pre-specified coding scheme. Returning to the previous example, the network name may take the form <IPv4 address>.<server-name>.<application-provider> where <IPv4 address> is the IPv4 literal address and <server-name>.<application-provider> identifies a specialized DNS translation server. At 503, a AAAA query is issued using the network name and, at 504, the DNS64 forwards the query to the DNS translation server (e.g., identified by <server-name>.<application-provider> in one embodiment). At 505, the DNS translation server generates an A record in response to the query (e.g., <IPv4 address> in one embodiment) and at 506, the DNS64 uses the A record to synthesize an IPv6 address. At 507, the IPv6 address is transmitted to the requesting host and, at 508, the host uses the synthesized IPv6 address to open a connection through a NAT64 to the IPv4 host.

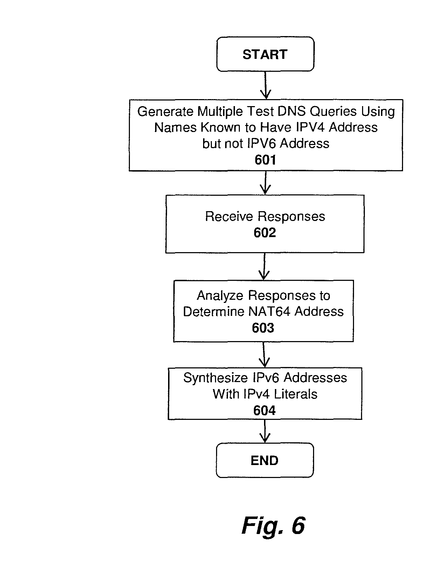

**Figure 6** illustrates a method for detecting the IPv6 coding scheme used for synthetic IPv6 addresses using IPv4 literals. Certain aspects of this method were described above with respect to the system architecture shown in **Figure 3****.** However, the underlying principles of this method are not limited to any particular system architecture.

At 601 multiple test DNS queries are generated using the network names of hosts known to have IPv4 addresses but not IPv6 addresses. In one example, the application provider (i.e., the entity providing the client software) provides a plurality of known network names which meet this requirement (e.g., test1.nat64-discovery.example.com, test2.nat64-discovery.example.com, etc). Alternatively, various well known public host names may be used. At 602, responses to the queries are received in the form of synthetically-generated IPv6 addresses that identify a particular NAT64 or group of NAT64 devices. At 603, the responses are analyzed to determine the coding scheme used to generate the synthetic IPv6 addresses. By way of example, each IPv6 address may simply encode the IPv4 address in a specified 32-bit field of the IPv6 address and the remainder of the IPv6 address may be used to identify the NAT64 server. Alternatively, each host name may assigned a random or sequential addressing slot in the NAT64 mapping. In such a case, it may be difficult (or impossible) to determine the IPv6 coding scheme. Assuming that some form of heuristic analysis can be used to determine the coding scheme (e.g., by "subtracting" out the known IPv4 address from the IPv6 address) then, once determined, at 604, the host may synthetically generate IPv6 addresses using any IPv4 literals (e.g., as part of a P2P application or other application type).

In one embodiment, rather than transmitting a query from the DNS64 server 202 to the IPv4 DNS translator 201 as described above, the DNS64 server 202 may itself include the logic necessary for extracting the IPv4 address from the test query. Returning to the previous example, if the test query takes the form <IPv4 address>.<server-name>.<application-provider> where <IPv4 address> is the IPv4 literal and <server-name>.<application-provider> identifies a DNS translation server 201, the DNS64 server may be configured with the knowledge of this mapping scheme and may pretend to be the translation server 201 without actually making the query, thereby reducing the overall load on the DNS64 server 202 and the DNS translator server 201.

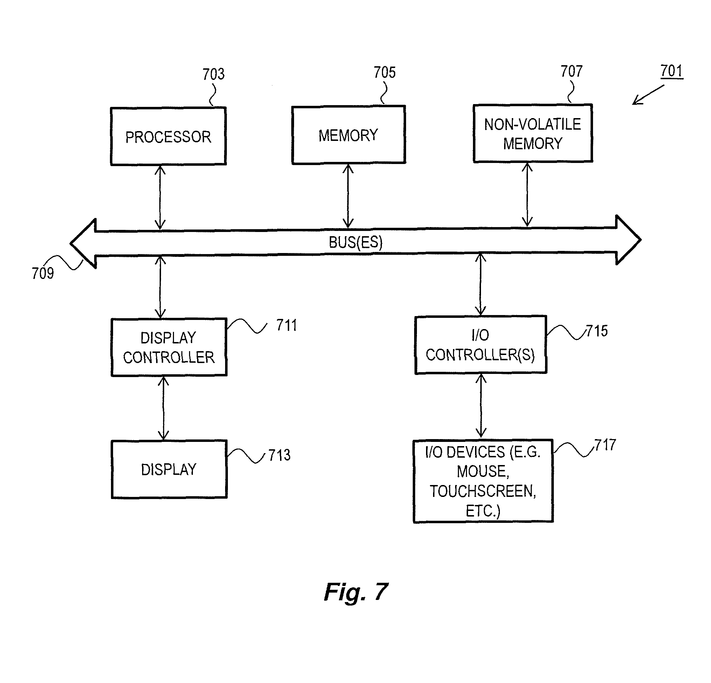

Any one of the methods described herein can be implemented on a variety of different data processing devices, including general purpose computer systems, special purpose computer systems, and mobile computing devices. For example, the data processing systems which may execute the methods described herein may include a desktop computer, laptop computer, tablet computer, smart phone, cellular telephone, personal digital assistant (PDA), embedded electronic device or any form of consumer electronic device. **Figure 7** shows one example of a typical data processing system which may be used with the present invention. Note that while **Figure 7** illustrates the various components of a data processing system, such as a computer system, it is not intended to represent any particular architecture or manner of interconnecting the components as such details are not germane to the present invention. It will also be appreciated that other types of data processing systems which have fewer components than shown or more components than shown in **Figure 7** may also be used with the present invention. The data processing system of **Figure 7** may be a Macintosh computer or PC computer. As shown in **Figure 7****,** the data processing system 701 includes one or more buses 709 which serve to interconnect the various components of the system. One or more processors 703 are coupled to the one or more buses 709 as is known in the art. Memory 705 may be DRAM or non-volatile RAM or may be flash memory or other types of memory. This memory is coupled to the one or more buses 709 using techniques known in the art. The data processing system 701 can also include non-volatile memory 707 which may be a hard disk drive or a flash memory or a magnetic optical drive or magnetic memory or an optical drive or other types of memory systems which maintain data even after power is removed from the system. The non-volatile memory 707 and the memory 705 are both coupled to the one or more buses 709 using known interfaces and connection techniques. A display controller 711 is coupled to the one or more buses 709 in order to receive display data to be displayed on a display device 713 which can display any one of the user interface features or embodiments described herein. The display device 713 can include an integrated touch input to provide a touch screen. The data processing system 701 can also include one or more input/output (I/O) controllers 715 which provide interfaces for one or more I/O devices, such as one or more mice, touch screens, touch pads, joysticks, and other input devices including those known in the art and output devices (e.g. speakers). The input/output devices 717 are coupled through one or more I/O controllers 715 as is known in the art. While **Figure 7** shows that the non-volatile memory 707 and the memory 705 are coupled to the one or more buses directly rather than through a network interface, it will be appreciated that the data processing system may utilize a non-volatile memory which is remote from the system, such as a network storage device which is coupled to the data processing system through a network interface such as a modem or Ethernet interface or wireless interface, such as a wireless WiFi transceiver or a wireless cellular telephone transceiver or a combination of such transceivers. As is known in the art, the one or more buses 709 may include one or more bridges or controllers or adapters to interconnect between various buses. In one embodiment, the I/O controller 715 includes a USB adapter for controlling USB peripherals and can control an Ethernet port or a wireless transceiver or combination of wireless transceivers. It will be apparent from this description that aspects of the present invention may be embodied, at least in part, in software. That is, the techniques and methods described herein may be carried out in a data processing system in response to its processor executing a sequence of instructions contained in a tangible, non-transitory memory such as the memory 705 or the non-volatile memory 707 or a combination of such memories, and each of these memories is a form of a machine readable, tangible storage medium. In various embodiments, hardwired circuitry may be used in combination with software instructions to implement the present invention. Thus the techniques are not limited to any specific combination of hardware circuitry and software nor to any particular source for the instructions executed by the data processing system.

In the foregoing specification, the invention has been described with reference to specific exemplary embodiments thereof. It will be evident that various modifications may be made thereto without departing from the broader scope of the invention as set forth in the following claims. The specification and drawings are, accordingly, to be regarded in an illustrative sense rather than a restrictive sense.

Embodiments of the invention may include various steps as set forth above. The steps may be embodied in machine-executable instructions which cause a general-purpose or special-purpose processor to perform certain steps. Alternatively, these steps may be performed by specific hardware components that contain hardwired logic for performing the steps, or by any combination of programmed computer components and custom hardware components. Elements of the present invention may also be provided as a machine-readable medium for storing the machine-executable program code. The machine-readable medium may include, but is not limited to, floppy diskettes, optical disks, CD-ROMs, and magneto-optical disks, ROMs, RAMs, EPROMs, EEPROMs, magnetic or optical cards, or other type of media/machine-readable medium suitable for storing electronic program code.

Throughout the foregoing description, for the purposes of explanation, numerous specific details were set forth in order to provide a thorough understanding of the invention. It will be apparent, however, to one skilled in the art that the invention may be practiced without some of these specific details. For example, it will be readily apparent to those of skill in the art that the functional modules and methods described herein may be implemented as software, hardware or any combination thereof. Moreover, although some embodiments of the invention are described herein within the context of a client P2P application, the underlying principles of the invention may be implemented in the form of a server application or any other form of client application. Accordingly, the scope of the invention should be judged in terms of the claims which follow.

## Claims

1. A computer-implemented method for generating an Internet Protocol Version 6 ,IPv6, address from an Internet Protocol Version 4 ,IPv4, address literal comprising:
constructing (502) a host name for a domain name query at a first host (200) by combining the IPv4 address literal with a domain name of a first domain name server (201), the first domain server configured to interpret the host name containing the IPv4 address literal to generate (505) an A record including the IPv4 address;
wherein the A record is usable to generate (506) a synthetic IPv6 address, the synthetic IPv6 address including a first portion identifying a network address translation ,NAT, 64 server (115) and a second portion identifying an IPv4 host (220, 221, 222) associated with the IPv4 address literal; and receiving (507) the synthetic IPv6 address at the first host, the synthetic IPv6 address usable by the first host to connect (508) to the IPv4 host through the NAT64 server.

2. The method as in claim 1 wherein constructing the host name comprises appending the IPv4 address literal to a domain name of a specialized domain name server capable of converting the constructed host name to an A record response having the IPv4 address.

3. The method as in claim 1 wherein the synthetic IPv6 address is generated by a second domain name server (202) which performs the operations of:
querying (504) the first domain name server identified by the constructed domain name to retrieve the A record;
combining the A record with an address of a known NAT64 server to form the synthetic IPv6 address, the NAT64 server usable for translating between IPv4 hosts and IPv6 hosts.

4. The method as in claim 3 further comprising:
analysing multiple synthetically-generated IPv6 addresses at the first host to determine a coding scheme used to encode the IPv4 literals into synthetic IPv6 addresses.

5. The method as in claim 4 wherein analyzing comprises performing a correlation between the synthetic IPv6 addresses and the IPv4 literal addresses used to generate each of the IPv6 addresses to identify how the IPv4 addresses are encoded within the synthetic IPv6 addresses.

6. The method as in claim 4 further comprising:
subsequently generating synthetic IPv6 addresses at the first host once the coding scheme has been determined.

7. A computer-implemented system for generating an Internet Protocol Version 6, ,IPv6, address from an Internet Protocol Version 4 IPv4, address literal, the system comprising a memory for storing program code and a processor for processing the program code to perform the operations of:
constructing (502) a host name for a domain name query at a first host (200) by combining the IPv4 address literal with a domain name of a first domain name server (201), the first domain name server configured to interpret the host name containing the IPv4 address literal to generate (505) an A record including the IPv4 address;
wherein the A record is usable to generate (506) a synthetic IPv6 address, the synthetic IPv6 address including a first portion identifying a network address translation, NAT, 64 server (115) and a second portion identifying an IPv4 host (220, 221, 222) associated with the IPv4 address literal; and
receiving (507) the synthetic IPv6 address at the first host, the synthetic IPv6 address usable by the first host to connect (508) to the IPv4 host through the NAT64 server.

8. The system as in claim 7 wherein constructing the host name comprises appending the IPv4 address literal to a domain name of a specialized domain name server capable of converting the constructed host name to an A record response having the IPv4 address.

9. The system as in claim 7 wherein the synthetic IPv6 address is generated by a second domain name server (202) which performs the operations of:
querying (504) the first domain name server identified by the constructed domain name to retrieve the A record;
combining the A record with an address of a known NAT64 server to form the synthetic IPv6 address, the NAT64 server usable for translating between IPv4 hosts and IPv6 hosts.

10. A machine-readable medium having program code stored thereon which, when executed by a machine, causes the machine to perform the method of any of claims 1 to 6.

## Patentansprüche

1. Computerimplementiertes Verfahren zum Generieren einer Adresse der Internet Protokoll Version 6, IPv6, aus einer Adresse Literal der Internet Protokoll Version 4, IPv4,
umfassend:
Konstruieren (502) eines Host-Namens für eine Domain-Namen-Anfrage an einem ersten Host (200) durch Kombinieren der IPv4-Adresse Literal mit einem Domain-Namen eines ersten Domain-Namen-Servers (201), wobei der erste Domain-Server konfiguriert ist, den Host-Namen zu interpretieren, der die IPv4-Adresse Literal enthält, um einen A-Satz zu generieren (505), welcher die IPv4-Adresse einschließt;
wobei der A-Satz verwendbar ist, eine synthetische IPv6-Adresse zu generieren (506), wobei die synthetische IPv6-Adresse einen ersten Abschnitt einschließt, der eine Netzwerk-Adressenübersetzung, NAT, 64 Server (115) identifiziert und ein zweiter Abschnitt einen IPv4-Host (220, 221, 222) identifiziert, der mit der IPv4-Adresse Literal assoziiert ist; und
Empfangen (507) der synthetischen IPv6-Adresse am ersten Host, wobei der erste Host die synthetische IPv6-Adresse verwenden kann, durch den NAT64-Server eine Verbindung (508) zum IPv4-Host herzustellen.

2. Verfahren wie im Anspruch 1, wobei das Konstruieren des Host-Namens das Anhängen der IPv4-Adresse Literal an einen Domain-Namen eines spezialisierten Domain-Namen-Servers umfasst, der fähig ist, den konstruierten Host-Namen in eine A-Satz-Antwort umzuwandeln, welche die IPv4-Adresse aufweist.

3. Verfahren wie im Anspruch 1, wobei die synthetische IPv6-Adresse von einem zweiten Domain-Namen-Server (202) generiert wird, der folgende Operationen ausführt:
Abfragen (504) des ersten Domain-Namen-Servers, der vom konstruierten Domain-Namen identifiziert wurde, um den A-Satz abzurufen;
Kombinieren des A-Satzes mit einer Adresse eines bekannten NAT64-Servers, um die synthetische IPv6-Adresse zu bilden, wobei der NAT64-Server zum Übersetzen zwischen IPv4-Hosts und IPv6-Hosts verwendbar ist.

4. Verfahren nach Anspruch 3, das weiter umfasst:
Analysieren mehrfacher synthetisch generierter IPv6-Adressen am ersten Host, um ein Code-Scheme zu ermitteln, das zum Codieren der IPv4-Literals in synthetische IPv6-Adressen verwendet wird.

5. Verfahren wie in Anspruch 4, wobei das Analysieren das Ausführen einer Korrelation zwischen den synthetischen IPv6-Adressen und den IPv4-Literal-Adressen umfasst, die verwendet wird, um jede der IPv6-Adressen zu generieren, um zu identifizieren wie die IPv4-Adressen innerhalb der synthetischen IPv6-Adressen codiert werden.

6. Verfahren nach Anspruch 4, das weiter umfasst:
Anschließend Generieren synthetischer IPv6-Adressen am ersten Host, sobald das Codier-Scheme ermittelt worden ist.

7. Computerimplementiertes System zum Generieren einer Adresse der Internet Protokoll Version 6, IPv6, aus einer Adresse Literal der Internet Protokoll Version 4, IPv4,
wobei das System einen Speicher zum Speichern von Programmcode und einen Prozessor zur Verarbeitung des Programmcodes umfasst, um folgende Operationen auszuführen:
Konstruieren (502) eines Host-Namens für eine Domain-Namen-Anfrage an einem ersten Host (200) durch Kombinieren der IPv4-Adresse Literal mit einem Domain-Namen eines ersten Domain-Namen-Servers (201), wobei der erste Domain-Namen-Server konfiguriert ist, den Host-Namen zu interpretieren, der die IPv4-Adresse Literal enthält, um einen A-Satz zu generieren (505), welcher die IPv4-Adresse einschließt;
wobei der A-Satz verwendbar ist, eine synthetische IPv6-Adresse zu generieren (506), wobei die synthetische IPv6-Adresse einen ersten Abschnitt einschließt, der eine Netzwerk-Adressenübersetzung, NAT, 64 Server (115) identifiziert und ein zweiter Abschnitt einen IPv4-Host (220, 221, 222) identifiziert, der mit der IPv4-Adresse Literal assoziiert ist; und
Empfangen (507) der synthetischen IPv6-Adresse am ersten Host, wobei der erste Host die synthetische IPv6-Adresse verwenden kann, durch den NAT64-Server eine Verbindung (508) zum IPv4-Host herzustellen.

8. System wie im Anspruch 7, wobei das Konstruieren des Host-Namens das Anhängen der IPv4-Adresse Literal an einen Domain-Namen eines spezialisierten Domain-Namen-Servers umfasst, der fähig ist, den konstruierten Host-Namen in eine A-Satz-Antwort umzuwandeln, welche die IPv4-Adresse aufweist.

9. System wie im Anspruch 7, wobei die synthetische IPv6-Adresse von einem zweiten Domain-Namen-Server (202) generiert wird, der folgende Operationen ausführt:
Abfragen (504) des ersten Domain-Namen-Servers, der vom konstruierten Domain-Namen identifiziert wurde, um den A-Satz abzurufen;
Kombinieren des A-Satzes mit einer Adresse eines bekannten NAT64-Servers, um die synthetische IPv6-Adresse zu bilden, wobei der NAT64-Server zum Übersetzen zwischen IPv4-Hosts und IPv6-Hosts verwendbar ist.

10. Maschinenlesbares Medium mit darauf gespeichertem Programmcode, der, bei Ausführung von einer Maschine bewirkt, dass die Maschine das Verfahren nach irgendeinem der Ansprüche 1 bis 6 ausführt.

## Revendications

1. Procédé mis en oeuvre par ordinateur permettant de générer une adresse de protocole Internet version 6, IPv6, à partir d'un libellé d'adresse de protocole Internet version 4, IPv4, comportant les étapes consistant à :
construire (502) un nom d'hôte pour une demande de nom de domaine au niveau d'un premier hôte (200) en combinant le libellé d'adresse IPv4 à un nom de domaine d'un premier serveur de noms de domaines (201), le premier serveur de noms de domaines étant configuré pour interpréter le nom d'hôte comprenant le libellé d'adresse IPv4 pour générer (505) un enregistrement A comprenant l'adresse IPv4 ;
dans lequel l'enregistrement A est en mesure d'être utilisé pour générer (506) une adresse IPv6 synthétique, l'adresse IPv6 synthétique comprenant une première partie identifiant un serveur de traduction d'adresses de réseau, NAT, 64 bits (115) et une deuxième partie identifiant un hôte IPv4 (220, 221, 222) associé au libellé d'adresse IPv4 ; et
recevoir (507) l'adresse IPv6 synthétique au niveau du premier hôte, l'adresse IPv6 synthétique étant en mesure d'être utilisée par le premier hôte à des fins de connexion (508) à l'hôte IPv4 par l'intermédiaire du serveur NAT64.

2. Procédé selon la revendication 1, dans lequel l'étape consistant à construire le nom d'hôte comporte l'étape consistant à ajouter le libellé d'adresse IPv4 à un nom de domaine d'un serveur spécialisé de noms de domaines en mesure de convertir le nom d'hôte construit en une réponse d'enregistrement A ayant l'adresse IPv4.

3. Procédé selon la revendication 1, dans lequel l'adresse IPv6 synthétique est générée par un deuxième serveur de noms de domaines (202) qui effectue les opérations consistant à :
interroger (504) le premier serveur de noms de domaines identifié par le nom de domaine construit pour extraire l'enregistrement A ;
combiner l'enregistrement A à une adresse d'un serveur NAT64 connu pour former l'adresse IPv6 synthétique, le serveur NAT64 étant utilisable à des fins de traduction entre des hôtes IPv4 et des hôtes IPv6.

4. Procédé selon la revendication 3, comportant par ailleurs :
l'étape consistant à analyser de multiples adresses IPv6 générées de manière synthétique au niveau du premier hôte pour déterminer un schéma de codage utilisé pour coder les libellés IPv4 en adresses IPv6 synthétiques.

5. Procédé selon la revendication 4, dans lequel l'étape consistant à analyser comporte l'étape consistant à effectuer une corrélation entre les adresses IPv6 synthétiques et les adresses à libellé IPv4 servant à générer chacune des adresses IPv6 pour identifier comment les adresses IPv4 sont codées à l'intérieur des adresses IPv6 synthétiques.

6. Procédé selon la revendication 4, comportant par ailleurs :
par la suite l'étape consistant à générer des adresses IPv6 synthétiques au niveau du premier hôte une fois que le schéma de codage a été déterminé.

7. Système mis en oeuvre par ordinateur permettant de générer une adresse de protocole Internet version 6, IPv6, à partir d'un libellé d'adresse de protocole Internet version 4, IPv4, le système comportant une mémoire permettant de stocker un code programme et un processeur permettant de traiter le code programme pour effectuer les opérations consistant à :
construire (502) un nom d'hôte pour une demande de nom de domaine au niveau d'un premier hôte (200) en combinant le libellé d'adresse IPv4 à un nom de domaine d'un premier serveur de noms de domaines (201), le premier serveur de noms de domaines étant configuré pour interpréter le nom d'hôte comprenant le libellé d'adresse IPv4 pour générer (505) un enregistrement A comprenant l'adresse IPv4 ;
dans lequel l'enregistrement A est en mesure d'être utilisé pour générer (506) une adresse IPv6 synthétique, l'adresse IPv6 synthétique comprenant une première partie identifiant un serveur de traduction d'adresses de réseau, NAT, 64 bits (115) et une deuxième partie identifiant un hôte IPv4 (220, 221, 222) associé au libellé d'adresse IPv4 ; et
recevoir (507) l'adresse IPv6 synthétique au niveau du premier hôte, l'adresse IPv6 synthétique étant en mesure d'être utilisée par le premier hôte à des fins de connexion (508) à l'hôte IPv4 par l'intermédiaire du serveur NAT64.

8. Système selon la revendication 7, dans lequel l'étape consistant à construire le nom d'hôte comporte l'étape consistant à ajouter le libellé d'adresse IPv4 à un nom de domaine d'un serveur spécialisé de noms de domaines en mesure de convertir le nom d'hôte construit en une réponse d'enregistrement A ayant l'adresse IPv4.

9. Système selon la revendication 7, dans lequel l'adresse IPv6 synthétique est générée par un deuxième serveur de noms de domaines (202) qui effectue les opérations consistant à :
interroger (504) le premier serveur de noms de domaines identifié par le nom de domaine construit pour extraire l'enregistrement A ;
combiner l'enregistrement A à une adresse d'un serveur NAT64 connu pour former l'adresse IPv6 synthétique, le serveur NAT64 étant utilisable à des fins de traduction entre des hôtes IPv4 et des hôtes IPv6.

10. Support lisible par un ordinateur ayant un code programme stocké sur celui-ci qui, quand il est exécuté par une machine, amène la machine à effectuer le procédé selon l'une quelconque des revendications 1 à 6.
